(19) Europäisches Patentamt

European Patent Office

Office européen des brevets

(11) Veröffentlichungsnummer: **0 300 339**
A2

(12) **EUROPÄISCHE PATENTANMELDUNG**

(21) Anmeldenummer: 88111176.9

(22) Anmeldetag: **13.07.88**

(51) Int. Cl.4: **B63B 25/22**

(30) Priorität: **21.07.87 DE 3724015**

(43) Veröffentlichungstag der Anmeldung:
**25.01.89 Patentblatt 89/04**

(84) Benannte Vertragsstaaten:
**AT BE CH DE ES FR GB GR IT LI LU NL SE**

(71) Anmelder: **GERMANISCHER LLOYD**
**Vorsetzen 32**
**D-2000 Hamburg 11(DE)**

(72) Erfinder: **Schümann, Ulrich**
**Lutzhorner Landstrasse 35**
**D-2202 Barmstedt(DE)**

(74) Vertreter: **Heldt, Gert, Dr. Dipl.-Ing.**
**Neuer Wall 59 III**
**D-2000 Hamburg 36(DE)**

(54) **Containerhalterung.**

(57) Die Vorrichtung zur Halterung von Containern auf einem Schiffsdeck weist mindestens einen Träger auf, der im Bereich seines in Lotrechter Richtung unteren Endes mit dem Schiffsdeck verbunden ist. Der Träger erstreckt sich im wesentlichen mit seiner Längsachse in lotrechter Richtung und ist mit mindestens einem den Container halternden Arretierungselement verbunden. Das Arretierungselement ist schwenkbar um eine sich im wesentlich in horizontaler Richtung erstreckende Drehachse angeordnet. Das Arretierungselement greift mindestens bereichsweise in den Container ein. Die Drehachse ist im wesentlichen quer zu einer Schiffslängsachse angeordnet. Mindestens ein Arretierungselement ist in einer Ebene angeordnet, die von einander zugewandten Begrenzungen von in Lotrechter Richtung übereinander gestapelten Containern aufgespannt ist.

# CONTAINERHALTERUNG

Die Erfindung betrifft eine Vorrichtung zur Halterung von Containern auf einem Schiffsdeck, die mindestens einen Träger aufweist, der im Bereich seines in lotrechter Richtung unteren Endes mit dem Schiffsdeck verbunden ist und sich im wesentlichen mit seiner Längsachse in lotrechter Richtung erstreckt sowie mit mindestens einem den Container halternden Arretierungselement verbunden ist.

Zur Halterung von Containern auf einem Schiffsdeck sind verschiedene Vorrichtungen bekanntgeworden. Am verbreitesten ist dabei eine formschlüssige Verbindung der Container untereinander und mit dem Schiffsdeck durch twist-lock-Verriegelungen. Die Verbindung der Container mit twist-lock-Verriegelungen weist jedoch den Nachteil auf, daß ein erheblicher Arbeitsaufwand zur Herstellung der Verriegelungen erforderlich ist. Darüber hinaus ist der Einsatz von twist-lock-Verriegelungen nur bis zu einer Stapelhöhe von zwei bis drei Containerlagen möglich, ohne daß zusätzliche Verzurrungen erforderlich sind, die ein Verrutschen der Ladung auf dem Schiffsdeck auch bei größerem Seegang zuverlässig vermeiden.

Es sind des weiteren Vorrichtungen bekanntgeworden, bei denen Containerführungen an im wesentlichen sich in lotrechter Richtung erstreckenden Stielen befestigt werden. Die Containerführung liegen dabei im Bereich der in lotrechter Richtung verlaufenden Containerkanten an den Wandungen der Container an und haltern die Container durch großflächig an den Containern anliegende Führungselemente.

Diese großflächige Führung der Container weist jedoch den Nachteil auf, daß bei Eigenbewegungen des Schiffes, die insbesondere bei schwerem Seegang auftreten, zum einen Verwindungen des Schiffes quer zu seiner Längsachse sowie in Richtung seiner Längsachse sowie Bewegungen der Lukendeckel relativ zum Schiffsdeck auftreten. Diese Eigenbewegungen des Schiffskörpers führen dazu, daß die Container die sie großflächig halternden Führungen nicht lediglich mit Kräften beaufschlagen, die in horizontaler Richtung ausgerichtet sind, sondern daß aufgrund von Flächenpressungen auch Kräfte übertragen werden, die die Stiele in lotrechter Richtung nach oben belasten. Aufgrund der Verbindung der Stiele mit dem Schiffsdeck führen derartig ausgerichtete Kräfte aber dazu, daß die in der Regel als Schweißnähte ausgebildeten Verbindungen der Stiele mit dem Schiffsdeck ihre Beständigkeit herabsetzenden Belastungen unterworfen sind. Die Verbindungen sind von ihrer Auslegung her zur Aufnahme von Kräften vorgesehen, die in in horizontaler Richtung ausgerichtet sind. In lotrechter Richtung nach oben ausgerichtete Kräfte können deshalb gegebenenfalls aufgrund von ungünstigen Hebelarmen Wirkungen entfalten, die einen sicheren Betrieb des Schiffes auf Dauer gefährden. Bei der Auslegung der Stiele werden diese Kräfte vernachlässigt, da sie bei der überwiegenden Betriebsdauer vergleichsweise klein sind.

Die die Container großflächig beaufschlagenden Containerführungen weisen darüber hinaus den Nachteil auf, daß sie die Beladung des Schiffsinnenraumes behindern. Zum einen sind die Führungen bei der Entfernung der die Ladeluken verschließenden Lukendeckel hinderlich, zum anderen stören die Führungen auch bei der Absenkung des zu verstauenden Gutes mittels Kränen oder Ladebrücken in den Innenraum des Schiffes.

Aufgabe der vorliegenden Erfindung ist es daher, eine Vorrichtung der einleitend genannten Art so zu verbessern, daß Container mit geringem Arbeitsaufwand sicher auf dem Schiffsdeck gehaltert werden.

Diese Aufgabe wird erfindungsgemäß dadurch gelöst, daß das Arretierungselement um eine sich in wesentlichen in horizontaler Richtung erstreckende Drehachse verschwenkbar angeordnet ist und mindestens bereichsweise in den Container eingreift.

Durch die Verschwenkbarkeit des Arretierungselements ist gewährleistet, daß dieses nach einem Verschwenken in Richtung auf den es tragenden Träger einen Be- und Entladevorgang des Schiffsinnenraums nicht behindert. Insbesondere ist ein Entfernen der die Schiffsluken verschließenden Lukendeckel in einfacher Weise möglich, ohne daß dieses Entfernen durch sich in lotrechter Richtung oberhalb der Lukendeckel erstreckende Halterungselemente behindert wird. Nach der Beladung des Schiffsinnenraums und dem Verschließen der Ladeluken mit den Lukendeckeln wird auf die Lukendeckel mindestens eine Lage Container aufgesetzt. Anschließend werden die Arretierungselemente um ihre Drehachse verschwenkt und greifen in Aussparungen ein, die im Bereich der Containerecken vorgesehen sind und bei üblicher Stauweise zur Aufnahme von twist-lock-Verschlüssen dienen. Durch die Arretierungselemente werden die Container ohne wesentlichen Arbeitsaufwand in ihrer vorgesehenen Position fixiert und gegen Verrutschen gesichert.

Gemäß einer bevorzugten Ausführungsform der Erfindung weist ein Arretierungselement jeweils zwei Arretierungszapfen auf, die sich bei einem Eingreifen in die Containeraussparungen im wesentlichen in lotrechter Richtung erstrecken. Die

gebildet ist. Es ist aber auch möglich, das Distanzelement (15) etwa stabförmig auszubilden. Das Distanzelement (15) weist eine in lotrechter Richtung nach oben ausgerichtete Oberseite (16) sowie eine der Oberseite (16) abgewandt angeordnete und im wesentlichen parallel zu ihr verlaufende Unterseite (17) auf. Das Arretierungselement (3) ist im Bereich der Oberseite (16) sowie im Bereich des dem Außenelement (14) abgewandt angeordneten Endes des Distanzelementes (15) vorgesehen. Es ist auch möglich, sowohl im Bereich der Oberseite (16) als auch im Bereich der Unterseite (17) jeweils ein Arretierungselement (3) anzuordnen, das jeweils eine in Ausnehmung (18) von einem Container (1) eingreift, die im Bereich von Eckbeschlägen (19) der Container (1) angeordnet ist.

Ein Arretierungselement (3) ist im wesentlichen als zylindrischer Zapfen (2o) ausgebildet, der im Bereich seines dem Distanzelement (15) abgewandt angeordneten Endes sich vom Distanzelement (15) entfernend verjüngt. Im Bereich der dem Distanzelement (15) abgewandt angeordneten Ausdehnung der Verjüngung ist das Arretierungselement (3) als Spitze (21) ausgebildet. Es ist auch möglich, den Zapfen (2o) im wesentlichen oval und der Ausbildung der Ausnehmung (18) angepaßt vorzusehen.

Im Bereich der Oberseite (16) ist eine Oberseitenöse (22) und im Bereich der Unterseite (17) eine Unterseitenöse (23) angeordnet. In die Ösen (22,23) greifen Haken (24,25) ein, die über Verzurrungselemente (26,27) die Container verspannend mit Beschlägen (19) weiterer Container (1) verbunden sind. Ein Verzurrungselement (26,27) ist als Drahtseil ausgebildet. Es ist aber auch möglich, andere Verzurrungselemente, beispielsweise Zugstangen, zu verwenden.

Im Bereich der Oberseite (16) weist das Distanzelement (15) eine seine Ausdehnung in Richtung auf das Drehscharnier (12) verjüngende Oberseitenanschrägung (28) auf. Das Distanzelement (15) weist in einer in horizontaler Richtung verlaufenden Schnittebene im wesentlichen einen reckeckförmigen Querschnitt auf, es ist aber möglich, das Distanzelement (15) trapezförmig auszubilden oder einen Querschnitt vorzusehen, der aus einem sich in Richtung auf den Container (1) erweiternden Trapez sowie aus einem sich an das Trapez anschließenden Rechteckquerschnitt ausgebildet ist.

Das Drehscharnier (12) kann bei einer mindestens bereichsweise trapezförmigen Ausbildung des Distanzelements (15) auch aus einem rohrförmig ausgebildeten Außenelement (14) ausgebildet sein, das im Bereich des Stieles (2) angeordnet ist, sowie einem im Außenelement (14) drehbar gelagerten zapfenförmigen Innenelement (13), das mit dem Distanzelement (15) verbunden ist.

Das Distanzelement (15) ist als sich über die gesamte Breite des Schiffes (11) erstreckende Platte ausgebildet, es ist aber auch möglich, das Distanzelement (15) aus Einzelplatten (28) auszubilden, von denen jeweils eine mindestens mit jeweils zwei Stielen (2) verbunden ist. Eine Einzelplatte (28) kann als Versteiferungselement (29) ausgebildet sein, das aus zwei x-förmig angeordneten Hauptstegen (3o, 31) sowie zwei jeweils zwei Enden der Hauptstege (3o,31) verbindende Seitenstegen (32,33) ausgebildet ist. Ein Hauptsteg (3o,31) erstreckt sich im wesentlichen ausgehend von einem Stiel (2) in Richtung auf einen Eckbeschlag (19) des Containers (1), der den Eckbeschlag (19) des Containers (1), der dem betreffenden Stiel (2) zugewandt angeordnet ist, bezüglich der Schiffslängsachs (6) gegenüberliegt. Zwischen dem Stiel (2) und dem ihm zugewandt angeordneten Eckbeschlag (19) erstreckt sich der Seitensteg (32,33).

Zwischen dem Distanzelement (15) und dem Zapfen (2o) ist ein Abstandselement (34) vorgesehen, es ist aber auch möglich, mehrere Abstandselemente (34) übereinander anzuordnen.

Nach einer Beladung des Innenraumes (1o) des Schiffes (11) werden die Ladeluken (8) mit den Lukendeckeln (9) abgedeckt und auf die Lukendeckel (9) eine erste Schicht von Containern (1) gestellt. Sind im Bereich der Träger (37) bereits in einer der Oberseite der Container (1) entsprechenden Ebene Arretierungselemente (3) angeordnet, so werden diese in Richtung auf die Eckbeschläge (19) der Container (1) verschwenkt. Anschließend wird auf die Arretierungselemente (3) mindestens eine weitere Schicht Container (1) aufgesetzt. Sind in der im Bereich der Oberseite der ersten Schicht der Container (1) angeordneten Ebene keine Arretierungselemente (3) vorgesehen, so werden zunächst so viele Schichten von Containern (1) übereinandergestapelt, bis die erste Arretierungselemente (3) enthaltene Ebene erreicht ist.

Bei der Halterung der Container (1) mit Arretierungselementen (3), die Oberseitenösen (22) und Unterseitenösen (23) aufweisen, wird nach einem Verschwenken der Arretierungselemente (3) in Richtung auf die Eckbeschläge (19) eine Verzurrung der Container vorgenommen. Dazu werden in die Oberseitenösen (22) und die Unterseitenösen (23) Haken (24,25) eingehängt, die mit den Verzurrungselementen (26,27) verbunden sind. Die Verzurrungselemente (26,27) werden mit den Eckbeschlägen (19) von weiteren Containern (1) verbunden und anschließend verspannt. Durch diese zusätzliche Verzurrung der Container kann eine sichere Stauung der Container auch dann gewährleistet werden, wenn in nur einer zwischen den Containern (1) in horizontaler Richtung verlaufenden Ebene Arretierungselemente (3) vorgesehen sind.

Anordnung von zwei Führungszapfen, von denen sich ein erster in den jeweils unteren und ein zweiter in den jeweils oberen Container erstreckt, ermöglicht in einfacher Weise die rutschfeste Verbindung jeweils zweier übereinander angeordneter Container. Nach einem Verschwenken der Arretierungselemente greift der in lotrechter Richtung untere der Führungszapfen in den unteren Container ein, auf den in lotrechter Richtung oberen Zapfen wird der oberhalb des bereits gestauten Containers vorgesehene weitere Container aufgesetzt.

Gemäß einer weiteren bevorzugten Ausführungsform der Erfindung sind im Bereich des Arretierungselementes Ösen angebracht, von denen jeweils mindestens eine in lotrechter Richtung nach unten und jeweils mindestens eine andere in lotrechter Richtung nach oben ausgerichtet ist. Die Anordnung der Ösen ermöglicht auch bei in mehreren Schichten gestauten Containern bei Verwendung von nur in einer Ebene angeordneten Arretierungselementen eine sichere Verstauung der Container durch zusätzliches Verzurren. Die Verzurrungen, die im Bereich ihres einen Endes im Bereich der Aussparungen von Containern befestigt werden, die ober- bzw. unterhalb der von den Arretierungselementen aufgespannten Ebene angeordnet sind, verbinden diese Aussparungen über Verspannungselemente mit den Ösen, in denen sie eingehakt sind.

Gemäß einer anderen bevorzugten Ausführungsform der Erfindung ist in jeder sich zwischen jeweils zwei Containerlagen erstreckenden Ebene mindestens ein in die Container eingreifendes Arretierungselement angeordnet. Die Anordnung von Arretierungselementen in jeder derartigen Ebene weist den Vorteil auf, daß auf die Verwendung zusätzlicher Verzurrungen vollständig verzichtet werden kann. Der zur Anbringung der Verzurrungen erforderliche Arbeitsaufwand kann dadurch vermieden werden und ein sicheres Verstauen der zu transportierenden Container in kurzer Zeit durchgeführt werden. Die mit erheblichen Kosten belasteten Liegezeiten des Schiffes können dadurch deutlich vermindert werden.

Weitere Einzelheiten der Erfindung ergeben sich aus der nachfolgenden ausführlichen Beschreibung und den beigefügten Zeichnungen, in denen bevorzugte Ausführungsformen der Erfindung beispielsweise veranschaulicht sind.

In den Zeichnungen zeigen:

Fig. 1: eine perspektivische Darstellung zweier übereinander angeordneter Containerlagen, bei denen in einer sich zwischen den Containerlagen erstreckenden Ebene die Container miteinander verbindende Arretierungselemente vorgesehen sind, die um eine sich in horizontaler Richtung erstreckende Drehachse verschwenkbar ausgebildet sind,

Fig. 2: eine Seitenansicht eines um eine Drehachse verschwenkbar angeordneten Arretierungselementes, das in zwei in lotrechter Richtung übereinander angeordnete Containeraussparungen eingreift sowie eine gestrichelt dargestellte Ruheposition des Arretierungselementes,

Fig. 3: eine Seitenansicht eines Arretierungselementes, das einen Führungszapfen aufweist, der in die Ausnehmung eines Containers eingreift, der in lotrechter Richtung oberhalb eines anderen Containers angeordnet ist und Ösen zur Aufnahme zusätzlicher Verzurrungen aufweist,

Fig. 4: eine Seitenansicht eines Stieles, der im Bereich seiner in Richtung der Schiffslängsachse ausgerichteten einander abgewandt angeordneten Begrenzungen jeweils ein Arretierungselement aufweist,

Fig. 5: eine Draufsicht auf ein Schiff mit drei Ladeluken und jeweils quer zur Schiffslängsachse ausgerichteten Reihen von Arretierungselementen tragenden Stielen,

Fig. 6: einen Querschnitt durch ein Schiff mit verschwenkbar angeordneten Arretierungselementen,

**und**

Fig. 7: einen Querschnitt durch ein Schiff mit einzeln gegenüber einem als Schott ausgebildeten Träger verschwenkbaren Arretierungselementen.

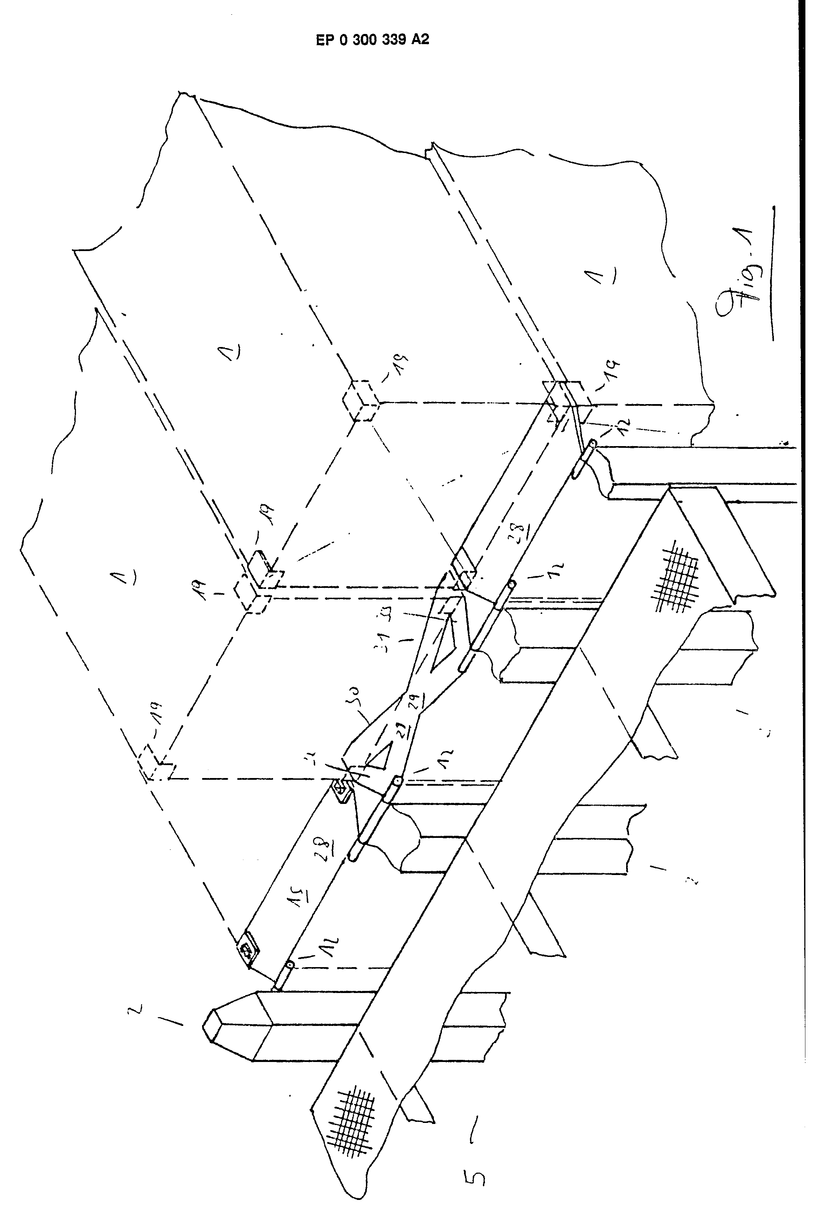

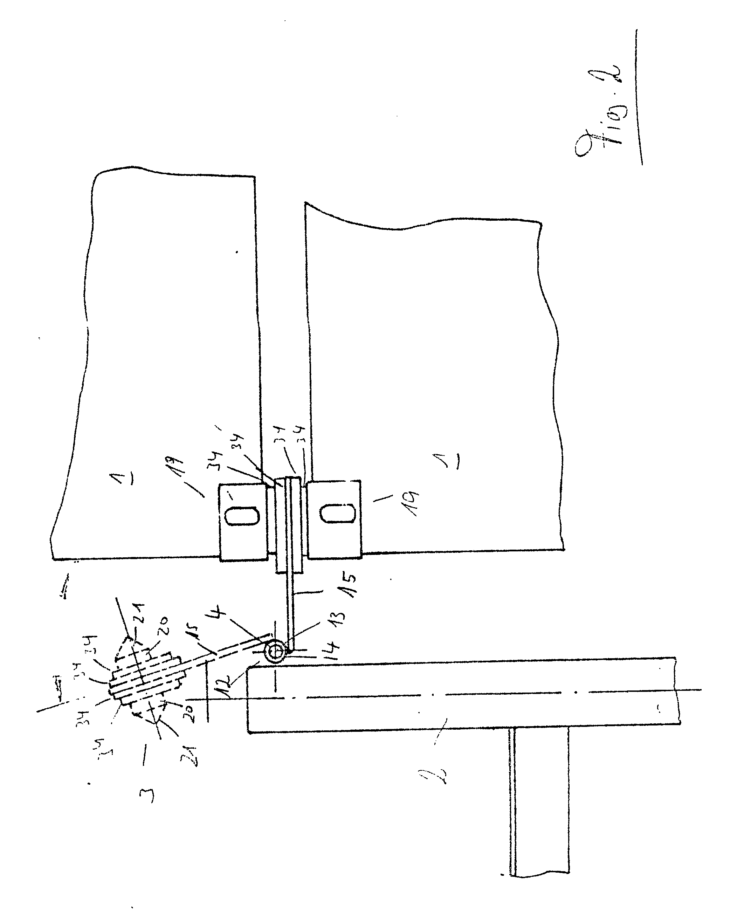

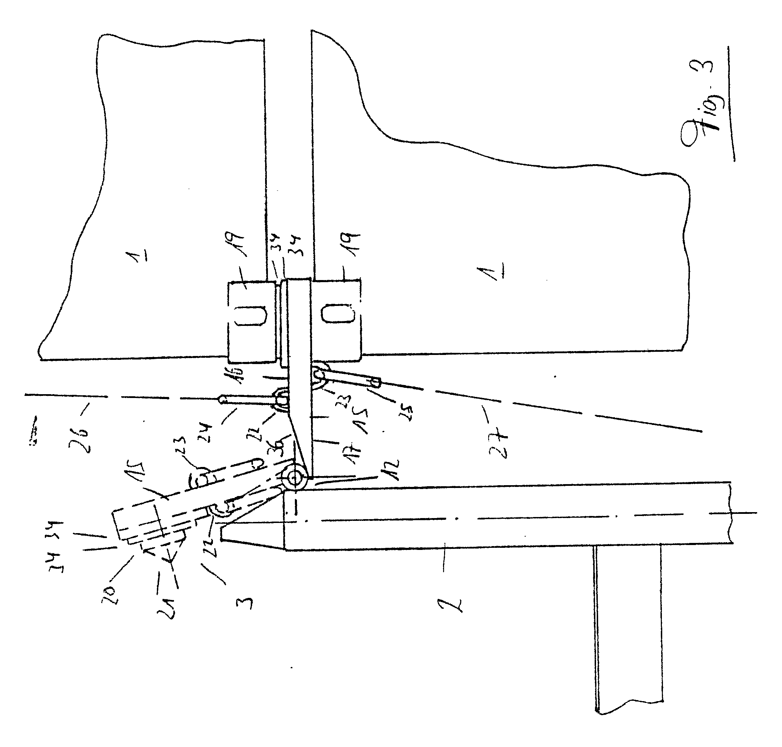

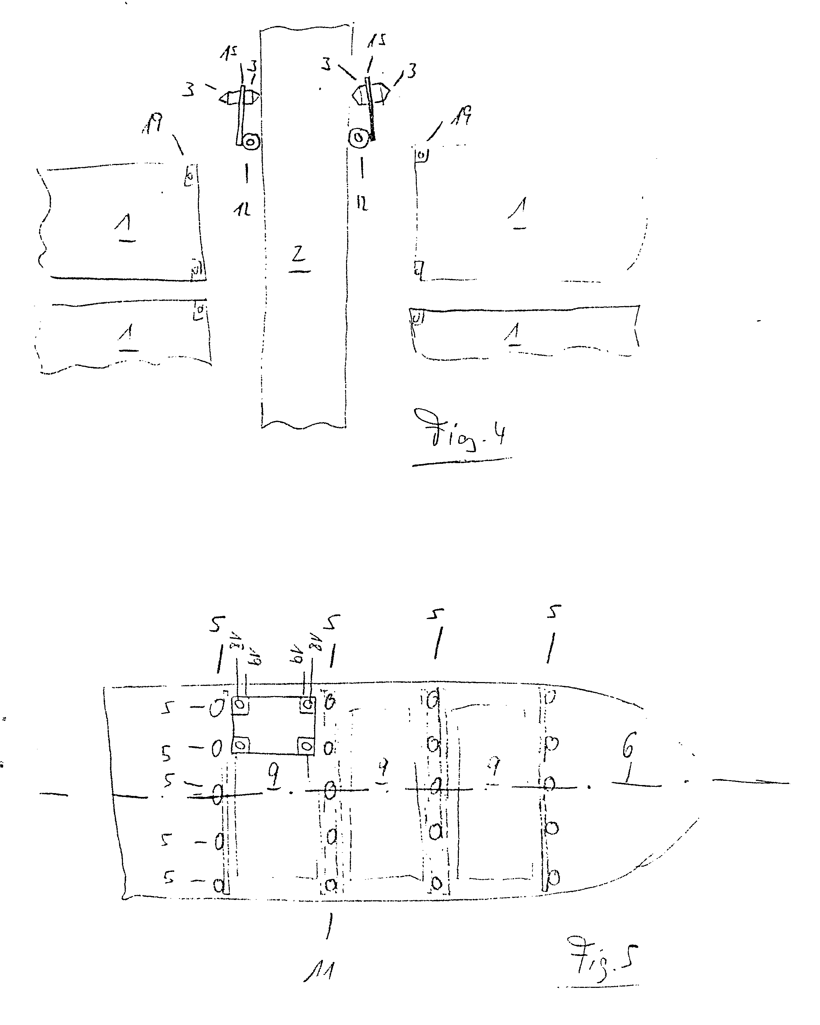

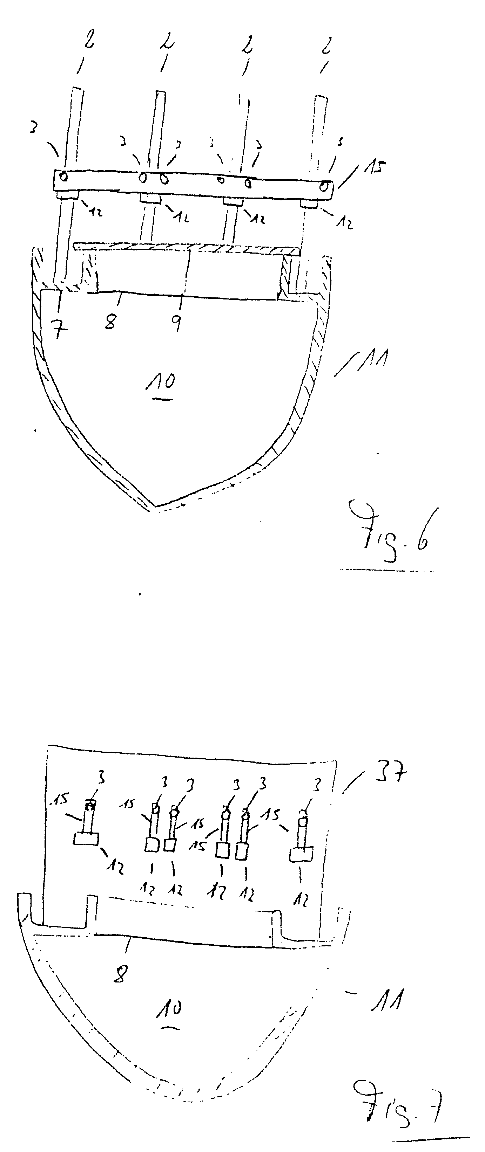

Eine Vorrichtung zur Halterung von einem Container (1) besteht im wesentlichen aus einem Träger (37), in dessen Bereich ein Arretierungselement (3) um eine Drehachse (4) verschwenkbar angeordnet ist. Der Träger (37) ist als Stiel (2) ausgebildet. Es ist auch möglich, mehrere Stiele (2) in einer Stielreihe (5) anzuordnen, die sich im wesentlichen quer zu einer Schiffslängsachse (6) erstreckt. Es ist des weiteren möglich, den Träger (37) als Aufbaufrontschott oder als Backschott auszubilden. Der Träger (37) ist im wesentlich lotrecht ausgerichtet und im Bereich seines in lotrechter Richtung unteren Endes mit einem Schiffsdeck (7) verbunden. Zwischen jeweils zwei Trägern (37) ist eine Ladeluke (8) angeordnet, die mit einem Lukendeckel (9) verschlossen ist. Die Ladeluke (8) verbindet einen Innenraum (1o) des Schiffes (11) mit einer das Schiff (11) umschließenden Umgebung.

Im Bereich der Drehachse (4) ist Drehscharnier (12) angeordnet, das im wesentlichen aus einem Innenelement (13) sowie einem das Innenelement (13) mindestens bereichsweise radial umschließenden und drehbeweglich auf dem Innenelement (13) gelagerten Außenelement (14) ausgebildet ist. Das Innenelement (13) ist mit mindestens einem Träger (37), das Außenelement (14) mit mindestens einem Arretierungselement (3) verbunden. Zwischen dem Außenelement (14) und dem Arretierungselement (3) erstreckt sich ein Distanzelement (15), das im wesentlichen plattenförmig aus-

Bei Distanzelementen (15) die sich über die gesamte Breite des Schiffes erstrecken, greifen sämtliche im Bereich des jeweiligen Distanzelementes (15) angeordnete Arretierungselemente (3) gleichzeitig in die zu halternden Container (1) ein. Die Verschwenkung des Distanzelementes (15) erfolgt hydraulisch, es ist aber auch möglich, eine mechanische Verstellung vorzusehen. Bei einer Unterteilung der Distanzelemente (15) in Einzelplatten (28) kann die Verschwenkung der Arretierungselemente (3) in Richtung auf die Eckbeschläge (19) jeweils für jede betreffende Einzelplatte (28) unabhängig von den weiteren Einzelplatten (28) vorgenommen werden. Hierdurch ist eine flexible Handhabung der Vorrichtung gegeben. Darüber hinaus ist bei einer Ausbildung der Distanzelemente (15) als stabförmige Elemente eine Einzelverschwenkung jedes einzelnen Arretierungselementes (3) möglich.

Zur Entladung des Schiffes (11) werden zunächst gegebenenfalls vorgesehene Verzurrungselemente (26,27) entfernt und anschließend oberhalb der Arretierungselemente (3) angeordnete Container (1) entfernt. Anschließend werden die Distanzelemente (15) in Richtung auf die sie tragenden Stiele (2) verschwenkt und geben dadurch den oberhalb der Ladeluken (8) angeordneten Stauraum frei. Nach einer vollständigen Entfernung der Container (1) können dadurch die Lukendeckel (9) ohne Behinderung durch die Arretierungselemente (3) oder die Distanzelemente (15) entfernt und damit der Zugang zum Innenraum (1o) des Schiffes (11) freigegeben werden.

**Ansprüche**

1. Vorrichtung zur Halterung von Containern auf einem Schiffsdeck, die mindestens einen Träger aufweist, der im Bereich seines in lotrechter Richtung unteren Endes mit dem Schiffsdeck verbunden ist und sich im wesentlichen mit seiner Längsachse in lotrechter Richtung erstreckt sowie mit mindestens einem den Container halternden Arretierungselement verbunden ist, dadurch gekennzeichnet, daß das Arretierungselement (3) um eine sich im wesentlichen in horizontaler Richtung erstreckende Drehachse (4) verschwenkbar angeordnet ist und mindestens bereichsweise in den Container (1) eingreift.

2. Vorrichtung nach Anspruch 1, dadurch gekennzeichnet, daß die Drehachse (4) im wesentlichen quer zu einer Schiffslängsachse (6) angeordnet ist.

3. Vorrichtung nach Anspruch 1 und 2, dadurch gekennzeichnet, daß in mindestens einer Ebene, die von einander zugewandten Begrenzungen von in lotrechter Richtung übereinander gestapelten Containern (1) aufgespannt ist, mindestens ein Arretierungselement (3) angeordnet ist.

4. Vorrichtung nach Anspruch 1 bis 3, dadurch gekennzeichnet, daß in jeder sich in lotrechter Richtung erstreckenden Ebene, die von einander zugewandten Begrenzungen von übereinander gestapelten Containern aufgespannt ist, mindestens ein Arretierungselement (3) angeordnet ist.

5. Vorrichtung nach Anspruch 1 bis 4, dadurch gekennzeichnet, daß mindestens zwei den Träger (37) ausbildende Stiele (2) in einer Stielreihe (5) angeordnet sind, die sich im wesentlichen parallel zu einer quer zur Schiffslängsachse (6) verlaufenden Begrenzung einer Ladeluke (8) erstreckt.

6. Vorrichtung nach Anspruch 1 bis 5, dadurch gekennzeichnet, daß im Bereich jeder quer zur Schiffslängsachse (6) verlaufenden Begrenzung einer Ladeluke (8) eine Stielreihe (5) angeordnet ist.

7. Vorrichtung nach Anspruch 1 bis 6, dadurch gekennzeichnet, daß der Container (1) im Bereich jeder seiner einem Träger (37) zugewandten Begrenzungen von mindestens einem ihn halternden Arretierungselement (3) beaufschlagt ist.

8. Vorrichtung nach Anspruch 1 bis 7, dadurch gekennzeichnet, daß sich zwischen dem Arretierungselement (3) und dem ihn tragenden Träger (37) ein Distanzelement (15) erstreckt, das fest mit dem Arretierungselement (3) und über ein Drehscharnier (12) verschwenkbar mit dem Träger (37) verbunden ist.

9. Vorrichtung nach Anspruch 1 bis 8, dadurch gekennzeichnet, daß das Distanzelement (15) im wesentlichen plattenförmig ausgebildet ist.

1o. Vorrichtung nach Anspruch 1 bis 9, dadurch gekennzeichnet, daß sich das Distanzelement (15) über die gesamte Schiffsbreite erstreckt.

11. Vorrichtung nach Anspruch 1 bis 9, dadurch gekennzeichnet, daß das Distanzelement (15) aus mindestens zwei Einzelplatten (28) ausgebildet ist, die in einer quer zur Schiffslängsachse (6) verlaufenden Richtung hintereinander angeordnet sind.

12. Vorrichtung nach Anspruch 11, dadurch gekennzeichnet, daß eine Einzelplatte (28) mit mindestens einem Stiel (2) verbunden ist.

13. Vorrichtung nach Anspruch 11 und 12, dadurch gekennzeichnet, daß jede Einzelplatte (28) mit mindestens zwei Stielen (2) verbunden ist.

14. Vorrichtung nach Anspruch 11 bis 13, dadurch gekennzeichnet, daß mindestens eine Einzelplatte (26) als Versteifungselement (29) ausgebildet ist, das zwei x-förmig angeordnete Hauptstege (3o,31) sowie zwei die Hauptstege (3o,31) im Bereich zweier ihrer Enden verbindende Seitenstege (32,33) aufweist.

15. Vorrichtung nach Anspruch 14, dadurch gekennzeichnet, daß jeweils ein Ende der Hauptstege (3o.31) im Bereich jeweils eines Stiels (2) und jeweils ein diesen Ende abgewandt angeordnetes weiteres Ende im Bereich jeweils eines Eckbeschlages (19) angeordnet ist.

16. Vorrichtung nach Anspruch 1 bis 15, dadurch gekennzeichnet, daß das Arretierungselement (3) als Zapfen (2o) ausgebildet ist, der von einer im Bereich eines Eckbeschlages (19) des Containers (1) vorgesehenen Ausnehmung (18) aufgenommen ist.

17. Vorrichtung nach Anspruch 1 bis 16, dadurch gekennzeichnet, daß der Zapfen (2o) im wesentlichen zylindrisch ausgebildet ist und eine Spitze (21) aufweist, die mit dem Zapfen (2o) im Bereich dessen dem Distanzelemement (15) abgewandt angeordneten Endes verbunden ist und sich in eine dem Distanzelement (15) abgewandt ausgerichtete Richtung verjüngt.

18. Vorrichtung nach Anspruch 1 bis 16, dadurch gekennzeichnet, daß der Zapfen (2o) eine der Ausnehmung (18) angepaßte und diese im wesentlichen ausfüllende Ausbildung aufweist.

19. Vorrichtung nach Anspruch 1 bis 18, dadurch gekennzeichnet, daß der Zapfen (2o) im Bereich einer das Distanzelement (15) in lotrechter Richtung oben begrenzenden Oberseite (16) angeordnet ist.

2o. Vorrichtung nach Anspruch 1 bis 18, dadurch gekennzeichnet, daß der Zapfen (2o) im Bereich einer das Distanzelement (15) in lotrechter Richtung unten begrenzenden Unterseite (17) angeordnet ist.

21. Vorrichtung nach Anspruch 1 bis 2o, dadurch gekennzeichnet, daß sowohl im Bereich der Oberseite (16) als auch im Bereich der Unterseite (17) ein Zapfen (2o) angeordnet ist.

22. Vorrichtung nach Anspruch 1 bis 21, dadurch gekennzeichnet, daß sich zwischen dem Zapfen (2o) und dem Distanzelement (15) mindestens ein Abstandselement (34) erstreckt.

23. Vorrichtung nach Anspruch 1 bis 22, dadurch gekennzeichnet, daß im Bereich der Unterseite (17) mindestens eine Unterseitenöse (23) angeordnet ist, die im wesentlichen halbkreisförmig ausgebildet ist.

24. Vorrichtung nach Anspruch 1 bis 23, dadurch gekennzeichnet, daß im Bereich der Oberseite (16) mindestens eine Oberseitenöse (22) angeordnet ist, die im wesentlichen halbkreisförmig ausgebildet ist.

25. Vorrichtung nach Anspruch 1 bis 24, dadurch gekennzeichnet, daß in eine Öse (22,23) ein Haken (24,25) eingreift, der mit einem den Container (1) verspannenden Verzurrungselement (26,27) verbunden ist.

26. Vorrichtung nach Anspruch 25, dadurch gekennzeichnet, daß das Verzurrungselement (26,27) als Drahtseil ausgebildet ist.

27. Vorrichtung nach Anspruch 25, dadurch gekennzeichnet, daß das Verzurrungselement (26,27) als Zugstange ausgebildet ist.

28. Vorrichtung nach Anspruch 1 bis 27, dadurch gekennzeichnet, daß das Distanzelement (15) einen es hydraulisch um die Drehachse (4) verschwenkenden Antrieb aufweist.

29. Vorrichtung nach Anspruch 1 bis 27, dadurch gekennzeichnet, daß das Distanzelement (15) einen es elektrisch um die Drehachse (4) verschwenkenden Antrieb aufweist.

3o. Vorrichtung nach Anspruch 1 bis 27, dadurch gekennzeichnet, daß das Distanzelement (15) manuell um die Drehachse (4) verschwenkbar ausgebildet ist.

31. Vorrichtung nach Anspruch 1 bis 3o, dadurch gekennzeichnet, daß das Distanzelement (15) im Bereich seiner Oberseite (16) eine seinen Querschnitt in Richtung auf das Drehscharnier (12) verjüngende Oberseitenanschrägung (36) aufweist.

32. Vorrichtung nach Anspruch 1 bis 31, dadurch gekennzeichnet, daß das Distanzelement (15) in einer horizontal verlaufenden Schnittebene eine Querschnittfläche aufweist, die im wesentlichen rechteckförmig ausgebildet ist.

33. Vorrichtung nach Anspruch 1 bis 31, dadurch gekennzeichnet, daß das Distanzelement (15) in einer im wesentlichen horizontalen Richtung verlaufenden Schnittebene eine im wesentlichen trapezförmig ausgebildete Querschnittfläche aufweist.

34. Vorrichtung nach Anspruch 1 bis 31, dadurch gekennzeichnet, daß das Distanzelement (15) in einer im wesentlichen in horizontaler Richtung verlaufenden Schnittebene eine Querschnittfläche aufweist, die im Bereich ihrer dem Träger (37) zugewandten Ausdehnung als sich in Richtung auf den Träger (37) verjüngendes Trapez und in einem dem Träger (37) abgewandten Bereich ihrer Ausdehnung im wesentlichen rechteckförmig ausgebildet ist.

35. Vorrichtung nach Anspruch 1 bis 34, dadurch gekennzeichnet, daß das Drehscharnier (12) im wesentlichen als ein mit dem Träger (37) verbundenes Innenelement (13) ausgebildet ist, das von einem mit dem Distanzelement (15) verbundenen Außenelemente (19) mindestens bereichsweise radial umschlossen ist.

36. Vorrichtung nach Anspruch 35, dadurch gekennzeichnet, daß das Außenelement (14) im wesentlichen rohrförmig und das Innenelement (13) im wesentlichen zapfenförmig ausgebildet ist.

37. Vorrichtung nach Anspruch 1 bis 36, dadurch gekennzeichnet, daß in zwei einem Träger (37) zugewandte Eckbeschläge (19) jeweils ein separat gegenüber dem Träger (37) verschwenkbares Arretierungselement (3) eingreift.

38. Vorrichtung nach Anspruch 1 bis 37, dadurch gekennzeichnet, daß der Träger (37) als Aufbaufrontschott ausgebildet ist.

39. Vorrichtung nach Anspruch 1 bis 37, dadurch gekennzeichnet, daß der Träger (37) als Backschott ausgebildet ist.

Fig. 1

Fig. 2

EP 0 300 339 A2

Fig. 3

Fig. 4

Fig. 5

EP 0 300 339 A2

Fig. 6

Fig. 7